# DEMANDE DE BREVET EUROPEEN

(11) **EP 4 632 765 A1**
(43) Date de publication de la demande: **15.10.2025**
(21) Numéro de dépôt: 25168090.6
(22) Date de dépôt: 02.04.2025
(51) Int. Cl.: G21C 17/00, G01N 3/02, G01N 3/18, G21C 17/06, G21C 17/017, G21C 3/06

(54) **DISPOSITIF ET PROCÉDÉ D'ESSAI MÉCANIQUE D'UN ÉCHANTILLON TUBULAIRE DE GAINE DE COMBUSTIBLE NUCLÉAIRE EN CONDITION D'ACCIDENT**

(30) Priorité: 10.04.2024 FR 2403705
(71) Demandeur: Commissariat à l'Energie Atomique et aux Energies Alternatives, 75015 Paris (FR)
(72) Inventeur: BONO, Matthew, 91190 GIF-SUR-YVETTE (FR)
(74) Mandataire: INNOV-GROUP

(57) **Abrégé**

Dispositif et procédé d'essai mécanique d'un échantillon tubulaire (1) de gaine de combustible nucléaire en conditions d'accident, comportant :
- un noyau cylindrique déformable (5) adapté à être disposé dans un espace d'essai mécanique (4), en étant inséré dans l'échantillon tubulaire (1), ce noyau cylindrique déformable (5) comportant au niveau de sa périphérie un enroulement (11) d'un fil (12) électriquement conducteur, cet enroulement (11) comportant une première extrémité de connexion (14A) adaptée à être électriquement connectée à l'un des pistons de compression (2), et qui comporte une deuxième extrémité de connexion (14B) adaptée à être électriquement connectée à l'autre piston de compression (2) ;
- un générateur électrique (19) adapté à faire circuler un courant électrique entre les deux pistons de compression (2) et dans ledit enroulement (11).

## Description

### DOMAINE TECHNIQUE

L'invention concerne le domaine de l'énergie nucléaire et concerne plus particulièrement le domaine de la sécurité des installations. L'invention vise les moyens de diagnostic et d'essai mis en œuvre pour analyser le comportement mécanique d'éléments utilisés dans les réacteurs nucléaires.

Un réacteur nucléaire comporte typiquement des assemblages de crayons tubulaires, appelés gaines, dans lesquels sont empilées les pastilles de combustible nucléaire. Ces gaines tubulaires sont le lieu où se déroulent les réactions de fission nucléaire qui génèrent de la chaleur et des produits de fission. Les gaines tubulaires forment la première barrière de confinement contre la dissémination du combustible et des produits de fission.

Pour des raisons de sûreté, dans un parc électronucléaire, il est capital de connaitre le comportement mécanique du matériau des gaines tubulaires, soumis à certaines sollicitations, représentatives de conditions de service nominal, de conditions incidentelles ou accidentelles particulières. Pour obtenir ces informations, des essais mécaniques et thermiques spécifiques sont réalisés en cellules blindées sur des échantillons de gaines tubulaires issus de réacteurs. Des essais sont également réalisés en laboratoires classiques sur des échantillons de gaines non-irradiés.

L'invention vise, dans ce cadre, à fournir des données sur le comportement mécanique d'un échantillon de gaine tubulaire (notamment la déformation à rupture) subissant des conditions représentatives de celles rencontrées en réacteur en conditions accidentelles, qui sont les conditions les plus critiques.

### ART ANTÉRIEUR

Dans le but de se rapprocher le plus possible des conditions nominales réelles de fonctionnement des gaines de combustible nucléaire, les demandes de brevet FR3041097 et FR3101421 décrivent des solutions permettant de comprimer un média disposé à l'intérieur d'un échantillon de gaine, dans le but d'imposer des sollicitations mécaniques biaxiales aux gaines. Cependant, ces dispositifs ne permettent pas des essais mécaniques en condition d'accident, c'est-à-dire lorsque la température augmente très rapidement.

D'autres solutions proposent d'associer les éléments d'essai mécanique à des moyens de chauffage de la gaine, de sorte à se rapprocher des conditions d'accident. Cependant, ces solutions permettent des vitesses de montée en température de l'échantillon de l'ordre de 100 à 200 °C par seconde, qui restent malgré tout éloignées des conditions réelles d'accident, dans lesquelles la température peut augmenter à des vitesses allant jusqu'à 1 000 °C/s.

### EXPOSÉ DE L'INVENTION

L'invention a pour but d'améliorer les dispositifs et procédés de l'art antérieur.

À cet effet, l'invention vise un dispositif d'essai mécanique d'un échantillon tubulaire de gaine de combustible nucléaire en conditions d'accident, ce dispositif comportant deux pistons de compression mobiles l'un par rapport à l'autre selon un axe de serrage et définissant entre eux un espace d'essai mécanique. Dans ce dispositif, les pistons de compression comportent au moins une portion électriquement conductrice. Le dispositif comporte de plus :
- un noyau cylindrique déformable adapté à être disposé dans l'espace d'essai mécanique, en étant inséré dans ledit échantillon tubulaire de gaine de combustible nucléaire, ce noyau cylindrique déformable comportant au niveau de sa périphérie un enroulement d'un fil électriquement conducteur, cet enroulement comportant une première extrémité de connexion adaptée à être électriquement connectée à l'un des pistons de compression, et une deuxième extrémité de connexion adaptée à être électriquement connectée à l'autre piston de compression ;
- un générateur électrique adapté à faire circuler un courant électrique entre les deux pistons de compression et dans ledit enroulement.

Selon un autre objet, l'invention vise un procédé d'essai mécanique d'un échantillon tubulaire de gaine de combustible nucléaire en conditions d'accident, mettant en œuvre un dispositif tel que décrit ci-dessus. Ce procédé comporte les étapes suivantes :
- la mise en place d'un échantillon tubulaire de gaine de combustible nucléaire dans l'espace d'essai, le noyau cylindrique déformable étant inséré dans l'échantillon tubulaire de gaine de combustible nucléaire, et lesdites première extrémité de connexion et deuxième extrémité de connexion étant électriquement connectée au piston de compression correspondant ;
- une première séquence de montée en température de l'échantillon tubulaire de gaine de combustible nucléaire, par chauffage dudit enroulement en connectant les deux pistons de compression au générateur électrique ;
- une deuxième séquence de compression dans laquelle les deux pistons de compression sont déconnectés du générateur électrique et compriment le noyau cylindrique.

L'invention permet de mettre en œuvre des essais mécaniques d'échantillons tubulaires de gaines de combustible nucléaire en condition d'accident, grâce à des pistons de compression mobiles permettant de soumettre l'échantillon à des déformations mécaniques, qu'elles soient monoaxiales ou biaxiales, avec une montée en température très rapide de l'échantillon, proche des conditions réelles d'accident.

L'invention permet de réaliser des essais mécaniques avec une vitesse de montée en température de l'ordre de 400 à 800 °C par seconde, ce qui correspond à une vitesse de montée en température représentative des conditions auxquelles peuvent être soumises les gaines tubulaires de combustible nucléaire en cas d'accident.

Le dispositif selon l'invention peut comporter les caractéristiques additionnelles suivantes, seules ou en combinaison :
- ledit enroulement est intégré dans le matériau du noyau cylindrique déformable ;
- le fil électriquement conducteur est muni d'une gaine électriquement isolante ;
- le fil électriquement conducteur est enroulé de manière hélicoïdale sur une face cylindrique externe du noyau cylindrique déformable, d'une extrémité à l'autre du noyau cylindrique déformable suivant l'axe de serrage ;
- la première extrémité de connexion et la deuxième extrémité de connexion comportent respectivement un premier conducteur et un deuxième conducteur traversant chacun une portion du piston de compression correspondant ;
- les pistons de compression comportent chacun un barreau électriquement conducteur, adapté à être relié au générateur électrique, et un tampon cylindrique électriquement isolant adapté à être disposé contre le noyau cylindrique déformable ;
- le noyau cylindrique déformable comporte une portion cylindrique interne d'un premier matériau, emmanchée dans une portion annulaire externe d'un deuxième matériau, différent du premier matériau ;
- la limite élastique de la portion cylindrique interne est inférieure à la limite élastique de la portion annulaire externe ;
- la température de fusion de la portion annulaire externe est supérieure à la température de fusion de la portion cylindrique interne ;
- le dispositif comporte des mors adaptés à fixer les extrémités dudit échantillon tubulaire de gaine de combustible nucléaire ;
- les mors sont mobiles en écartement suivant l'axe de serrage.

Le procédé selon l'invention peut comporter les caractéristiques additionnelles suivantes, seules ou en combinaison :
- la première séquence est réalisée par chauffage dudit enroulement par effet Joule ;
- la première séquence est réalisée par chauffage par induction de l'échantillon tubulaire de gaine de combustible nucléaire.

### PRÉSENTATION DES FIGURES

D'autres caractéristiques et avantages de l'invention ressortiront de la description non limitative qui suit, en référence aux dessins annexés dans lesquels :
- la figure 1 est une vue en coupe d'un dispositif d'essai mécanique selon l'invention, avec un échantillon tubulaire de gaine de combustible nucléaire en place ;
- la figure 2 est une vue en coupe du dispositif de la figure 1, en cours d'essai mécanique ;
- la figure 3 est un graphique illustrant la montée en température permise par le dispositif des figures 1 et 2 ;
- la figure 4 est un graphique illustrant la vitesse de chauffe en fonction du niveau de température, lors de la mise en œuvre du dispositif des figures 1 et 2.

Les éléments similaires et communs aux divers modes de réalisation portent les mêmes numéros de renvoi aux figures.

### DESCRIPTION DÉTAILLÉE

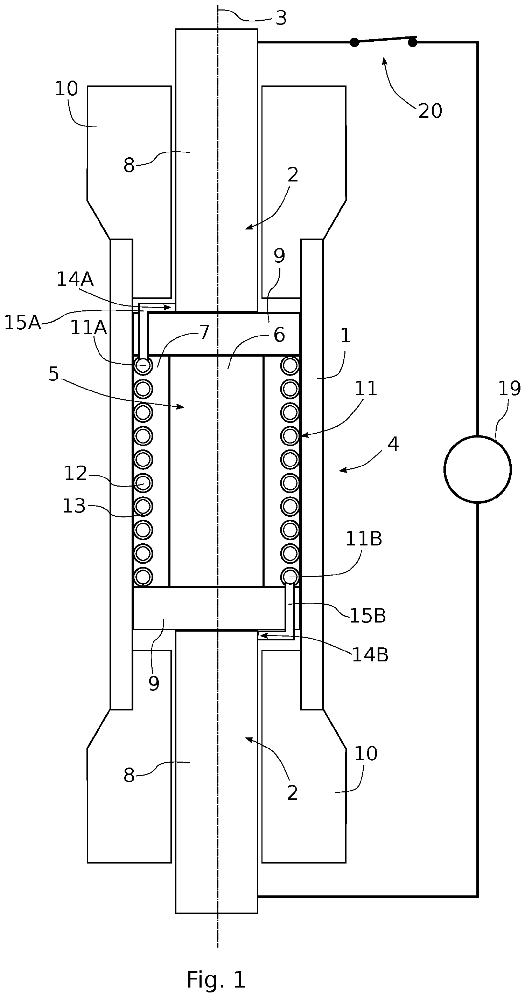

La figure 1 est une vue schématique en coupe d'un dispositif d'essai mécanique selon l'invention. Ce dispositif est destiné à la réalisation d'essais mécaniques sur un échantillon tubulaire de gaine de combustible nucléaire en condition d'accident.

Le dispositif d'essai mécanique est illustré dans une configuration où il est prêt à réaliser un essai, avec un échantillon tubulaire 1 de gaine de combustible nucléaire mis en place dans le dispositif et prêt à être testé.

Le dispositif d'essai mécanique comporte deux pistons de compression 2 mobiles l'un par rapport à l'autre selon un axe de serrage 3. Les pistons de compression 2 définissent entre eux un espace d'essai mécanique 4 dans lequel l'échantillon tubulaire 1 va pouvoir être mis sous contrainte mécanique après une mise en condition thermique.

Le dispositif d'essai mécanique comporte de plus un noyau cylindrique 5 qui est déformable. Le noyau cylindrique 5 est de préférence constitué d'un matériau ductile ou d'un assemblage de matériaux ductiles, de sorte à présenter une déformation radiale (augmentation locale de son diamètre) lorsqu'il est comprimé selon l'axe de serrage 3.

De manière particulièrement avantageuse, dans le présent exemple, le noyau cylindrique 5 comporte une portion cylindrique interne 6 réalisée en un matériau qui déforme à faible force compressive aux températures nominales de fonctionnement. Par exemple, la portion cylindrique interne 6 est ici réalisée en aluminium, qui est très ductile avec une faible limite élastique à partir de 200 °C. La force nécessaire pour comprimer le noyau cylindrique 5 reste ainsi modérée de sorte à ne pas endommager les pistons de compression 2, et ne requiert pas de moyens de presse trop conséquents.

Le noyau cylindrique 5 comporte de plus, dans cet exemple, une portion annulaire externe 7, dans laquelle est emmanchée la portion cylindrique interne 6. De préférence, la portion annulaire externe 7 est réalisée en un matériau supportant une température plus élevée que la portion cylindrique interne 6. Par exemple, la portion annulaire externe 7 est réalisée en cuivre, qui présente un point de fusion de l'ordre de 1085 °C. À la température de l'essai, la portion annulaire externe 7 doit présenter une ductilité élevée et doit déformer à faible force compressive, ce qui est le cas dans cet exemple avec le couple aluminium/cuivre. Tout autre couple de matériaux adéquat, dont l'un présente un point de fusion supérieur à l'autre, peut être envisagé.

Les pistons de compression 2 sont disposés de part et d'autre du noyau cylindrique 5 de sorte que leur serrage est adapté à comprimer axialement (c'est-à-dire suivant l'axe de serrage 3) le noyau cylindrique 5.

De préférence, la portion des pistons de compression 2 qui est adaptée à venir en contact avec le noyau cylindrique 5 est sensiblement de même diamètre que le noyau cylindrique 5.

Dans le présent exemple, les pistons de compression 2 comportent un barreau 8, qui est électriquement conducteur, et un tampon cylindrique 9 qui est électriquement isolant. Le barreau 8 est par exemple métallique. Le diamètre du tampon cylindrique 9 est sensiblement égal au diamètre du noyau cylindrique 5. En variante, le tampon cylindrique 9 peut également être conducteur et comporter un revêtement isolant sur sa face en contact avec le noyau cylindrique 5.

Le dispositif d'essai mécanique peut comporter de plus des moyens de mise en position de l'échantillon tubulaire 1. Dans cet exemple, ces moyens sont constitués de mors 10 qui sont adaptés à se solidariser à chaque extrémité de l'échantillon tubulaire 1, par exemple par serrage, vissage, soudage, ou tout autre moyen de fixation.

Les mors 10 permettent ainsi, en plus du maintien de l'échantillon tubulaire 1, de participer à l'essai mécanique en fixant ou en étirant axialement l'échantillon tubulaire 1 si un essai mécanique biaxial est souhaité.

Pour la mise en œuvre d'un essai, l'échantillon tubulaire 1 est préparé à partir d'une gaine de combustible neuve (pour un essai de caractérisation) ou usagée. Les réacteurs nucléaires comportent classiquement des gaines de combustible d'une longueur de l'ordre de 4 mètres et d'un diamètre de l'ordre de 1 centimètre. L'échantillon tubulaire 1 peut être préparé en coupant une gaine de combustible. Dans un exemple de réalisation, l'échantillon tubulaire 1 ainsi préparé présente une longueur de l'ordre de 3 cm (suivant l'axe de serrage 3 sur la figure 1), pour un noyau cylindrique 5 d'une longueur de l'ordre de 14 mm.

L'échantillon tubulaire 1 est disposé dans l'espace d'essai mécanique 4, et le noyau cylindrique 5 est inséré dans l'échantillon tubulaire 1. Dans cet exemple, les mors 10 sont de plus solidarisés à chaque extrémité de l'échantillon tubulaire 1.

Le noyau cylindrique 5 comporte de plus sur sa périphérie un enroulement 11 réalisé par un fil 12 électriquement conducteur. Dans cet exemple, le fil 12 est enroulé suivant une spirale à la périphérie externe du noyau cylindrique 5. Le fil 12 est ainsi enroulé de manière hélicoïdale d'une extrémité à l'autre du noyau cylindrique 5, c'est-à-dire sur toute sa longueur suivant l'axe de serrage 3.

Dans cet exemple, le fil 12 est intégré dans la matière de la face cylindrique externe du noyau cylindrique 5 comme illustré sur la figure 1. Dans cet exemple, avec le noyau cylindrique 5 constitué d'une portion cylindrique interne 6 et d'une portion annulaire externe 7, le fil 12 est noyé dans la matière de la portion annulaire externe 7.

L'enroulement 11 forme ainsi une bobine enroulée sur le noyau cylindrique 5.

Des agencements alternatifs peuvent être envisagés pour former une telle bobine avec l'enroulement 11. Le fil 12 peut être par exemple disposé dans une gorge hélicoïdale pratiquée sur la surface externe du noyau cylindrique 5, grâce à un procédé de fabrication additive ou d'usinage. Le fil 12 peut par ailleurs être enroulé directement sur le noyau cylindrique 5. Le fil 12 peut être de section circulaire, comme dans l'exemple de la figure 1, ou par exemple de section rectangulaire ou aplatie. Le fil 12 peut par exemple être une bande conductrice enroulée sur la superficie de la face cylindrique externe du noyau cylindrique 5. Le fil 12 peut par ailleurs avoir la forme d'une feuille ou d'un revêtement sur la surface externe du noyau cylindrique 5.

Le fil 12 peut être de plus muni d'une gaine 13 électriquement isolante. La gaine 13 est adaptée à résister à de fortes températures et est par exemple réalisée par un enrobage céramique du fil 12.

La bobine constituée par l'enroulement 11 présente une première spire d'extrémité 11A ainsi qu'une deuxième spire d'extrémité 11B à l'opposé. Chacune de ces spires d'extrémité 11A, 11B est électriquement raccordée à l'un des pistons de compression 2 par une extrémité de connexion 14A, 14B.

Dans le présent exemple, la première extrémité de connexion 14A de l'enroulement 11 comporte un premier conducteur 15A qui traverse le tampon cylindrique 9 et qui est électriquement connectée au barreau 8 correspondant, qui est conducteur.

De même, à l'autre extrémité de l'enroulement 11, la deuxième extrémité de connexion 14B de l'enroulement 11 comporte un deuxième conducteur 15B, qui traverse le tampon cylindrique 9 et est électriquement connectée au barreau 8 correspondant.

Un circuit électrique peut ainsi être établi entre les deux pistons de compression 2, à travers l'enroulement 11 formant une bobine. La figure 1 illustre schématiquement un générateur électrique 19 ainsi connecté aux deux pistons de compression 2. Un interrupteur 20 schématise la fermeture du circuit de sorte qu'un courant alternatif ou continu adapté (voir premier et deuxième mode de réalisation ci-après) circule dans l'enroulement 11 pour provoquer une montée en température de l'échantillon tubulaire 1.

La connexion des extrémités de connexion 14A, 14B avec les pistons de compression 2 peut être réalisée par tous moyens, tels que connecteurs, contacts électriques, etc. Il est également possible de réaliser cette connexion par soudage ou sertissage une fois l'ensemble mis en place.

À partir de ce montage de la figure 1, l'échantillon tubulaire 1 étant mis en place dans le dispositif d'essai mécanique, avec l'enroulement 11 électriquement raccordé aux pistons de compression 2, le procédé d'essai mécanique peut être mis en œuvre.

Dans une première séquence, dite de montée en température (illustrée à la figure 1, avec l'interrupteur 20 schématique fermé), l'échantillon tubulaire 1 va tout d'abord subir une contrainte thermique provoquée par une élévation rapide de la température de sa paroi grâce à l'enroulement 11.

Selon un premier mode de réalisation, l'enroulement 11 chauffe par effet Joule et chauffe la paroi de l'échantillon tubulaire 1 lorsqu'il monte en température. Dans ce cas, le fil 12 présente une résistance électrique adaptée à un appareil de chauffage par effet Joule, et un fort courant continu (par exemple plusieurs dizaines d'ampères) est appliqué entre les deux pistons de compression 2. Dans un exemple de réalisation, le fil 12 a un diamètre de l'ordre de 0,5 à 1 mm.

Selon un deuxième mode de réalisation, l'enroulement 11 chauffe la paroi de l'échantillon tubulaire 1 par induction. Dans ce cas, un courant adapté à créer un phénomène d'induction dans l'échantillon tubulaire est appliqué entre les deux pistons de compression 2, par exemple un courant alternatif à haute fréquence.

Ces deux modes de réalisation peuvent être combinés, par exemple en pilotant le générateur électrique 19 alternativement sur un mode chauffage par effet Joule (avec une forte intensité) et sur un mode chauffage par induction (par un courant alternatif haute fréquence).

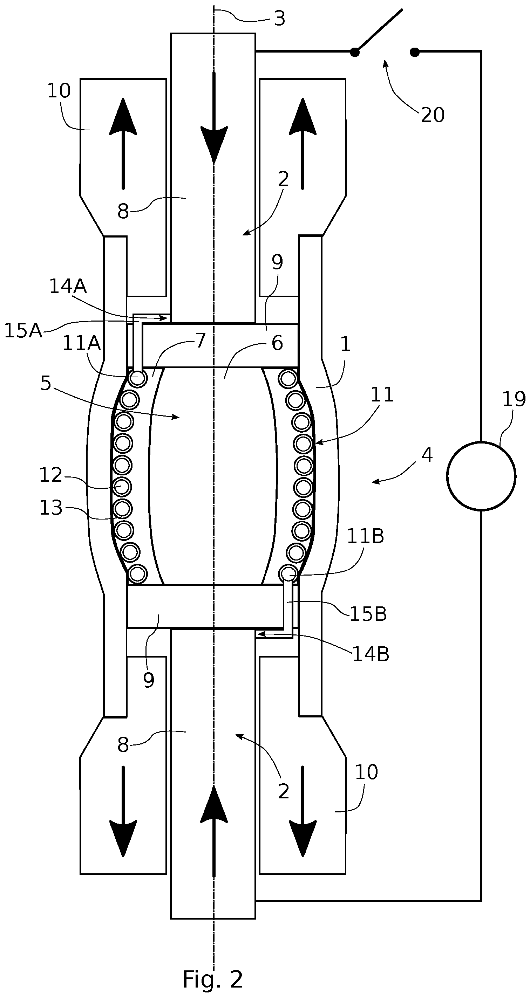

Dans une deuxième séquence, dite de compression (illustrée à la figure 2, avec l'interrupteur 20 schématique ouverte), dès que l'échantillon tubulaire 1 a subi la montée en température souhaitée, les pistons de compression 2 sont ensuite sollicités en rapprochement et viennent comprimer le noyau cylindrique 5. Les pistons de compression 2 sont par exemple déplacés par une presse.

La figure 2 illustre le résultat de cette séquence de compression.

Le noyau cylindrique 5 se déforme radialement et son diamètre augmente, sollicitant ainsi les parois de l'échantillon tubulaire 1 comme le ferait le combustible nucléaire dilaté. Cette déformation a lieu alors que d'une part l'échantillon tubulaire 1 a été porté à une température élevée, et que d'autre part cet échauffement a également été réalisé à une vitesse élevée, ce qui influe sur les caractéristiques mécaniques de l'échantillon tubulaire 1 de manière proche des conditions d'accident réelles.

L'invention est compatible avec un essai mécanique biaxial dans lequel, alors que les pistons de compression 2 sont sollicités en rapprochement, les mors 10 sont de plus sollicités en écartement l'un de l'autre de sorte qu'en plus d'être déformé radialement, l'échantillon tubulaire 1 est également déformé axialement en étant étiré entre les deux mors 10.

Dans cette deuxième séquence, l'échantillon tubulaire 1 ayant déjà été porté à la température souhaitée, le courant traversant l'enroulement 11 est coupé. Durant la compression du noyau cylindrique 5, il est possible que l'enroulement 11 soit endommagé, voire détruit, ainsi que les extrémités de connexion 14A, 14B, sans incidence sur l'essai mécanique. Dans un tel cas de destruction, le noyau cylindrique 5 est alors une pièce consommable, renouvelée à chaque essai mécanique.

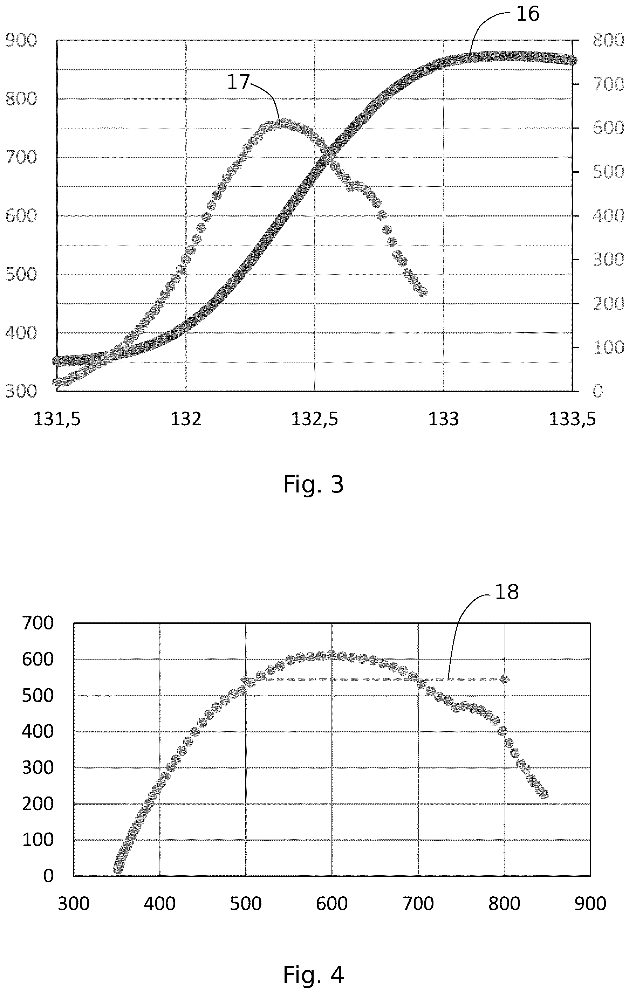

Les figures 3 et 4 sont relatives à un exemple d'essai mécanique réalisé avec un échantillon tubulaire 1 de 3 cm de long, un noyau cylindrique 5 de 14 mm de long et d'un diamètre ajusté au diamètre interne de l'échantillon tubulaire 1, et un fil 12 de 0,8 mm de diamètre. Le fil 12 de cet exemple est en cuivre-nickel. Cet exemple d'essai est réalisé avec un chauffage de l'enroulement 11 par effet Joule. Dans cet exemple, l'échantillon tubulaire 1 a pu être chauffé durant la première séquence à une température de l'ordre de 800 °C, avec des vitesses de chauffe supérieures à 500 °C/s.

La figure 3 illustre d'une part la température en °C mesurée sur l'échantillon tubulaire 1 (courbe 16 et valeurs sur l'échelle d'ordonnées sur la gauche du graphique) et d'autre part la vitesse de chauffe en °C/s (courbe 17 et valeurs sur l'échelle d'ordonnées sur la droite du graphique), et ce en fonction du temps en secondes (en abscisses).

Dans un premier temps, l'échantillon tubulaire 1 a été chauffé à 350 °C afin de reproduire sa température de service dans les conditions nominales de fonctionnement du réacteur nucléaire. Après un palier à 350 °C, un fort courant est passé (à la seconde 131,5) dans le fil 12 qui chauffe rapidement par effet Joule, puis le courant est coupé lorsque l'échantillon tubulaire 1 atteint 800 °C. Après la coupure du courant, une montée résiduelle de la température porte l'échantillon tubulaire 1 jusqu'à 870 °C.

Le diamètre du fil de 0,8 mm de cet exemple présente un bon compromis entre un diamètre faible (si le diamètre du fil 12 est trop faible, le fil 12 peut fondre avant de chauffer l'échantillon tubulaire 1) et un diamètre trop important qui ne permettrait pas de réaliser l'enroulement 11.

La courbe 17 rend compte de l'évolution de la vitesse de chauffe, paramètre de première importance. La plus grande vitesse de chauffe atteinte est supérieure à 600 °C/s et est atteinte à une température de 600 °C. À partir de cette température, le rayonnement de la surface externe de l'échantillon tubulaire 1 semble devenir important, et la vitesse de chauffe diminue. La vitesse de chauffe chute ensuite brutalement à 800 °C, lorsque le courant est coupé.

La figure 4 illustre ce même phénomène de l'évolution de la vitesse de chauffe. Le graphique de la figure 4 représente l'évolution de la vitesse de chauffe en °C/s en fonction de la température en °C atteinte.

La vitesse de chauffe est d'environ 400 °C/s à 800 °C, et la valeur moyenne (segment en pointillés 18) sur la plage de températures 500 °C - 800 °C est de 540 °C/s.

Des variantes de réalisation peuvent être mises en œuvre. Notamment les mors 10, qui sont nécessaires pour un essai biaxial, sont optionnels si un tel essai biaxial n'est pas souhaité. Les mors 10 peuvent par ailleurs être constitués par tout autre moyen mécanique adapté à étirer axialement l'échantillon tubulaire 1.

L'enroulement 11 peut également présenter d'autres contours d'enroulement qu'un contour hélicoïdal comme décrit précédemment. Il peut décrire des formes autour du noyau cylindrique 5, surtout s'il agit par effet Joule.

## Revendications

1. Dispositif d'essai mécanique d'un échantillon tubulaire (1) de gaine de combustible nucléaire en conditions d'accident, ce dispositif comportant deux pistons de compression (2) mobiles l'un par rapport à l'autre selon un axe de serrage (3) et définissant entre eux un espace d'essai mécanique (4), ce dispositif étant **caractérisé en ce que** les pistons de compression (2) comportent au moins une portion électriquement conductrice, et **en ce qu'**il comporte :
- un noyau cylindrique déformable (5) adapté à être disposé dans l'espace d'essai mécanique (4), en étant inséré dans ledit échantillon tubulaire (1) de gaine de combustible nucléaire, ce noyau cylindrique déformable (5) comportant au niveau de sa périphérie un enroulement (11) d'un fil (12) électriquement conducteur, cet enroulement (11) comportant une première extrémité de connexion (14A) adaptée à être électriquement connectée à l'un des pistons de compression (2), et une deuxième extrémité de connexion (14B) adaptée à être électriquement connectée à l'autre piston de compression (2) ;
- un générateur électrique (19) adapté à faire circuler un courant électrique entre les deux pistons de compression (2) et dans ledit enroulement (11).

2. Dispositif selon la revendication 1, **caractérisé en ce que** ledit enroulement (11) est intégré dans le matériau du noyau cylindrique déformable (5).

3. Dispositif selon l'une des revendications précédentes, **caractérisé en ce que** le fil (12) électriquement conducteur est muni d'une gaine (13) électriquement isolante.

4. Dispositif selon l'une des revendications précédentes, **caractérisé en ce que** le fil (12) électriquement conducteur est enroulé de manière hélicoïdale sur une face cylindrique externe du noyau cylindrique déformable (5), d'une extrémité à l'autre du noyau cylindrique déformable (5) suivant l'axe de serrage (3).

5. Dispositif selon l'une des revendications précédentes, **caractérisé en ce que** la première extrémité de connexion (14A) et la deuxième extrémité de connexion (14B) comportent respectivement un premier conducteur (15A) et un deuxième conducteur (15B) traversant chacun une portion du piston de compression (2) correspondant.

6. Dispositif selon l'une des revendications précédentes, **caractérisé en ce que** les pistons de compression (2) comportent chacun un barreau (8) électriquement conducteur, adapté à être relié au générateur électrique (19), et un tampon cylindrique (9) électriquement isolant adapté à être disposé contre le noyau cylindrique déformable (5).

7. Dispositif selon l'une des revendications précédentes, **caractérisé en ce que** le noyau cylindrique déformable (5) comporte une portion cylindrique interne (6) d'un premier matériau, emmanchée dans une portion annulaire externe (7) d'un deuxième matériau, différent du premier matériau.

8. Dispositif selon la revendication 7, **caractérisé en ce que** la limite élastique de la portion cylindrique interne (6) est inférieure à la limite élastique de la portion annulaire externe (7).

9. Dispositif selon l'une des revendications 7 ou 8, **caractérisé en ce que** la température de fusion de la portion annulaire externe (7) est supérieure à la température de fusion de la portion cylindrique interne (6).

10. Dispositif selon l'une des revendications précédentes, **caractérisé en ce qu'**il comporte des mors (10) adaptés à fixer les extrémités dudit échantillon tubulaire (1) de gaine de combustible nucléaire.

11. Dispositif selon la revendication 10, **caractérisé en ce que** les mors (10) sont mobiles en écartement suivant l'axe de serrage (3).

12. Procédé d'essai mécanique d'un échantillon tubulaire de gaine de combustible nucléaire en conditions d'accident, mettant en œuvre un dispositif selon l'une des revendications 1 à 11, **caractérisé en ce qu'**il comporte les étapes suivantes :
- la mise en place d'un échantillon tubulaire (1) de gaine de combustible nucléaire dans l'espace d'essai (4), le noyau cylindrique déformable (5) étant inséré dans l'échantillon tubulaire (1) de gaine de combustible nucléaire, et lesdites première extrémité de connexion (14A) et deuxième extrémité de connexion (14B) étant électriquement connectée au piston de compression (2) correspondant ;
- une première séquence de montée en température de l'échantillon tubulaire (1) de gaine de combustible nucléaire, par chauffage dudit enroulement (11) en connectant les deux pistons de compression (2) au générateur électrique (19) ;
- une deuxième séquence de compression dans laquelle les deux pistons de compression (2) sont déconnectés du générateur électrique (19) et compriment le noyau cylindrique (5).

13. Procédé selon la revendication 12, **caractérisé en ce que** la première séquence est réalisée par chauffage dudit enroulement (11) par effet Joule.

14. Procédé selon la revendication 12 ou 13, **caractérisé en ce que** la première séquence est réalisée par chauffage par induction de l'échantillon tubulaire (1) de gaine de combustible nucléaire.
